Europäisches Patentamt

European Patent Office

Office européen des brevets

(19)

(11) Veröffentlichungsnummer : **0 183 108**
**B1**

(12) **EUROPÄISCHE PATENTSCHRIFT**

(45) Veröffentlichungstag der Patentschrift :
15.06.88

(21) Anmeldenummer : 85114238.0

(22) Anmeldetag : 08.11.85

(51) Int. Cl.⁴ : **H 02 H   7/08**, H 02 H   3/52

(54) Elektrische Kurzschluss-Überwachungsanordnung für drehzahlgeregelte Drehstrommotoren einschliesslich deren Zuleitungen.

(30) Priorität : 23.11.84 DE 3442827

(43) Veröffentlichungstag der Anmeldung :
04.06.86 Patentblatt 86/23

(45) Bekanntmachung des Hinweises auf die Patenterteilung : 15.06.88 Patentblatt 88/24

(84) Benannte Vertragsstaaten :
BE DE GB

(56) Entgegenhaltungen :
GB-A- 2 047 021
US-A- 3 662 182
US-A- 4 133 413

(73) Patentinhaber : Siemens Aktiengesellschaft Berlin
und München
Wittelsbacherplatz 2
D-8000 München 2 (DE)

(72) Erfinder : Gradnitzer, Eckhard
Richard-Wagner-Strasse 12
D-8502 Zirndorf (DE)
Erfinder : Klautschek, Herwig, Dipl.-Ing.
Oberfürberger Strasse 18
D-8510 Fürth (DE)

## Beschreibung

Die Erfindung betrifft eine elektrische Kurzschluß-Überwachungsanordnung gemäß dem Oberbegriff des Patentanspruchs 1.

Elektrische Kurzschluß-Überwachungsanordnungen der vorgenannten Art haben vor allem im Bergbau-Untertage-Betrieb eine erhebliche Bedeutung. Wegen der bei Kurzschlüssen drohenden Überhitzungs- und damit Explosionsgefahr im Schlagwetterbetrieb ist es notwendig, nicht nur allein den Motor, etwa mit Hilfe eines Motorschutzschalters, zu überwachen, sondern auch dessen Zuleitungen im explosionsgefährdeten Bereich. Die Überwachung selbst sollte außerhalb dieses Bereiches erfolgen, weil anderenfalls auch die Überwachungsanordnung selbst explosionsgeschützt ausgeführt werden müßte. Im übrigen kommt der Überwachung der Zuleitungen eine noch größere Bedeutung zu als der Überwachung des Motors, weil dieser eine thermische Überlastungsschutzsicherung besitzt. Im Bergbau unter Tage besteht daher die Forderung, daß eine Leitung, in der ein Kurzschlußstrom auftritt, innerhalb von 100 ms vom einspeisenden Netz getrennt werden muß. Bei Stromzwischenkreisumrichtern der vorgenannten Art wird dies normalerweise durch eine Überwachung des magnetischen Flusses des angeschlossenen Motors, die in die Regelung mit eingebaut ist, erreicht. Eine solche Überwachung funktioniert aber erst bei Frequenzen oberhalb von 5 bis 7 Hz. Dies entspricht einer Motordrehzahl von etwa 10 % der Nenndrehzahl bei 50 Hz-Netzen. Im Bereich zwischen 0 und 10 % bleiben die Leitung zwischen Umrichter und Motor und auch der Motor selbst auf Kurzschluß unüberwacht. Eine Strommessung als Kriterium scheidet aus, da infolge der im Regelkreis des Umrichters stets vorhandenen Strombegrenzungsschaltung nicht unterschieden werden kann, ob der Überstrom durch Überlast oder Kurzschluß hervorgerufen wird.

Der Erfindung liegt die Aufgabe zugrunde, auch für diesen Bereich eine einwandfreie Kurzschlußüberwachung sicherzustellen.

Diese Aufgabe wird durch die im Patentanspruch 1 gekennzeichnete Erfindung gelöst. Dadurch ist erreicht, daß ein Kurzschluß auf der Motorseite eines Stromzwischenkreisumrichters vor allem auch im Bereich bis 15 Hz meßtechnisch erfaßt und als Steuergröße benutzt werden kann. Als Kurzschlußkriterium dient die bei der B6-Schaltung des mitgeführten Stromrichters mit sechsfacher Netzfrequenz auftretende Stromwelligkeit des Zwischenkreisstromes, die eine entsprechende Oberwellenspannung hervorruft. Diese Oberwellenspannung entsteht an der Streureaktanz von Motor und Zwischenkreis des Umrichters. Diese Oberwellenspannung sinkt im Kurzschlußfall auf Null. Nachdem diese in allen drei Phasen entsteht, läßt sich außerdem ermitteln, in welcher Phase der Kurzschluß aufgetreten ist.

Zweckmäßige Weiterbildungen und Ausgestaltungen der Erfindung sind in den abhängigen Ansprüchen gekennzeichnet.

Die Erfindung wird anhand eines Ausführungsbeispieles im folgenden näher erläutert. Es zeigen :

Fig. 1 ein Blockschaltbild des Motorstromkreises mit Stromzwischenkreis-Umrichter sowie der Kurzschluß-Überwachungsanordnung und den Schaltmitteln innerhalb des Motorstromkreises und

Fig. 2 ein Prinzipschaltbild der Überwachungsanordnung mit der Phasenüberwachungseinheit, dem Freigabemodul und dem Schaltmodul.

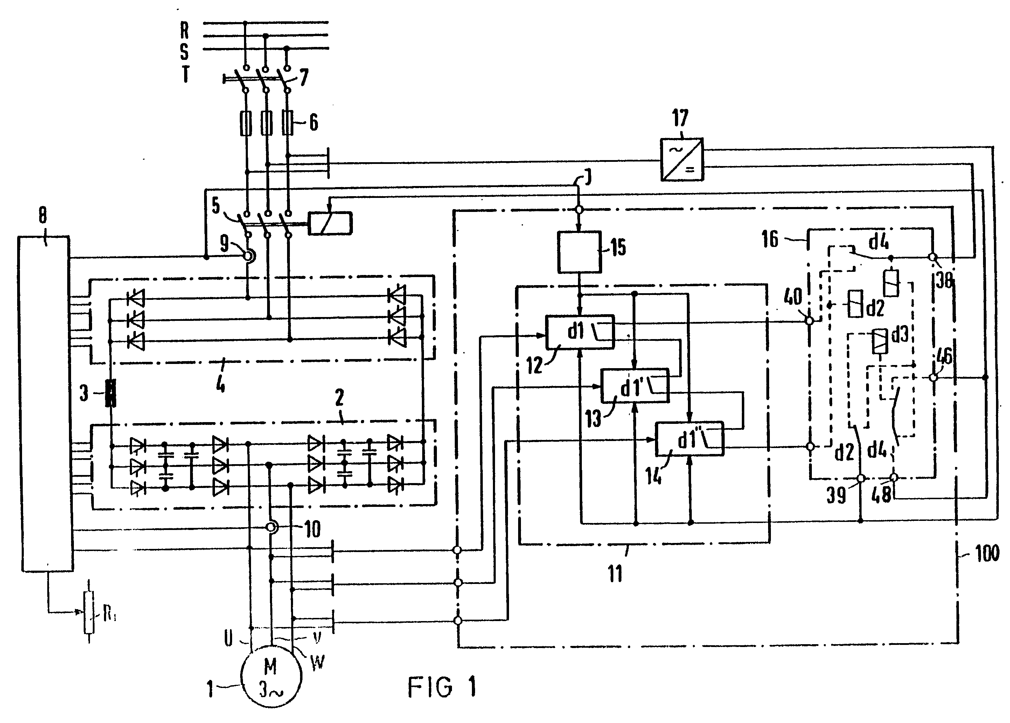

Gemäß Fig. 1 ist der Drehstrommotor 1 über die Zuleitungen U, V, W mit dem Ausgang des Zwischenkreis-Umrichters verbunden, der aus einem selbstgeführten, maschinenseitigen Stromrichter 2, einer Zwischenkreisdrossel 3 und einem netzgeführten, netzseitigen Thyristorstromrichter 4 in B6-Schaltung besteht und dessen Eingangsklemmen über einen Trennschalter 5, Sicherungen 6 und einen Hauptschalter 7 mit dem Drehstromnetz RST verbunden sind. Die Drehzahlregelung des Motors 1 geschieht in bekannter Weise aufgrund des am Sollwertgeber $R_n$ eingestellten Wertes mit Hilfe der Regelungsanordnung 8 aufgrund des vom Stromwandler 9 gemessenen Eingangstromwertes und des vom Stromwandler 10 gemessenen Ausgangsstromwertes sowie dem aus diesem und der Ausgangsspannung gebildeten Wert des magnetischen Erregerflusses. Aufgrund dieser Werte werden die Thyristoren des netzseitigen und des maschinenseitigen Stromrichters von der Regelungsanordnung 8 über Phasenanschnittsteuerung des netzseitigen Stromrichters 4 und Kommutierungssteuerung des maschinenseitigen Stromrichters 2 so beeinflußt, daß die gewünschte Drehzahl erreicht wird.

Die elektronische Kommutierung, wie sie etwa in dem Buch « Netzgeführte Stromrichter » von Möltgen, 1983 unter 2, Seiten 15 ff beschrieben ist, verursacht eine Stromwelligkeit, die an der Streureaktanz des Motors eine entsprechende Oberwellenspannung hervorruft, die bei der dargestellten Gleichrichterschaltung und einer Netzfrequenz von 50 Hz eine Frequenz von 300 Hz erreicht. Diese Oberwellenspannung entsteht in allen drei Phasen des Motorstromkreises.

Nachdem diese Oberwellenspannung ausgangsseitig an der Streureaktanz des Motors entsteht, bricht diese sowohl bei einem Kurzschluß innerhalb der Motorzuleitungen wie der Motorwicklung zusammen.

Der Erfindung liegt nun die Idee zugrunde, diese Eigenschaft der Oberwellenspannung mit Hilfe der im folgenden beschriebenen Anordnung für die Kurzschlußüberwachung nutzbar zu machen.

Gemäß Fig. 1 besteht die Kurzschluß-Überwachungsanordnung 100 aus einer Phasenüberwachungseinheit 11 mit je einem Phasenüberwachungsglied 12, 13, 14 für die Einzelüberwachung der Phasen U-V, V-W und U-W ; einem Freigabemodul 15 und einem Schaltmodul 16. Jedem der Phasenüberwachungsglieder 12, 13, 14 ist ein Relaiskontakt d1, d1' bzw. d1'' zugeordnet, die in Serie geschaltet mit dem Schaltmodul 16 verbunden sind. Solange alle Kontakte geschlossen sind, spricht der Trennschalter 5 nicht an, so daß auch dessen Kontakte geschlossen sind. Falls einer der Relaiskontakte, etwa durch einen Kurzschluß in einer der Motorphasen auf noch zu beschreibende Weise öffnet, wird der Erregerstromkreis des Trennschalters 5 vom Schaltmodul 16 ebenfalls unterbrochen, so daß dieser seine Kontakte öffnet und die Umrichter-Motor-Einheit vom Netz RST trennt. Die Stromversorgung der Überwachungsanordnung 100 erfolgt über das Netzteil 17.

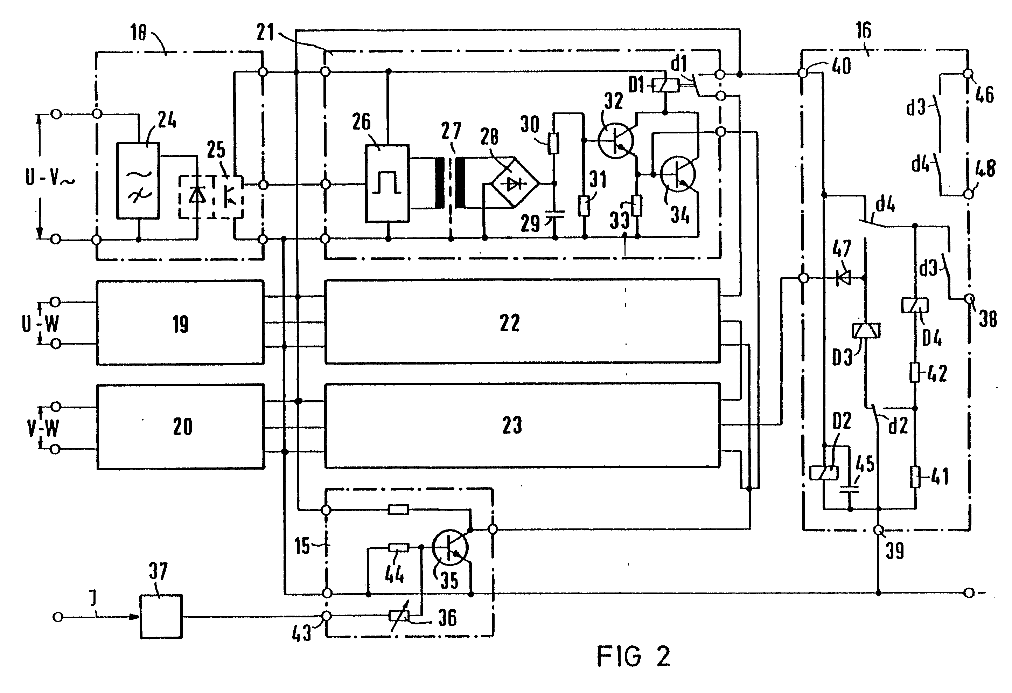

Aufgrund des in Fig. 2 dargestellten Prinzipschaltbildes der Phasenüberwachungseinheit 12 sowie des Freigabemoduls 15 und des Schaltmoduls 16 läßt sich die Funktionsweise der Überwachungsanordnung wie folgt beschreiben.

Jedes der Phasenüberwachungsglieder 12, 13, 14 besteht aus je einer Anpassungs- und Entkopplungsstufe 18, 19, 20, denen je eine Auswerteelektronik 21, 22, 23 zugeordnet ist. Nachdem die Phasenüberwachungsglieder aller drei Kanäle identisch aufgebaut sind, ist das Prinzipschaltbild lediglich des dem Phasenkanal U-V zugeordneten Phasenüberwachungsgliedes mit der Anpassungs- und Entkopplungsstufe 18 sowie deren Auswerteelektronik 21 dargestellt und beschrieben. Demzufolge gelangt nach dem Einschalten der Anordnung durch Betätigen des Netzschalters zunächst die Phasenspannung (U-V ; V-W und U-W) an das betreffende Hochpaßfilter 24, welches die Oberwellenspannung ausfiltert und einem Optokoppler 25 zuführt. Das in dieser Weise gewonnene, der Oberwellenspannung proportionale, galvanisch vom Leistungsteil getrennte Meßsignal wird nun der Auswerteelektronik 21 zugeführt und gelangt von dort über eine Impulsformerstufe 26 an einen Übertrager 27, der es mit Hilfe eines Glättungs-RC-Gliedes 29, 30 in eine Steuergleichspannung umwandelt und dem Basiswiderstand 31 eines Überwachungs-Schalttransistors 32 zuführt. Im Kollektor-Emitter-Kreis dieses Transistors liegt das Kanalrelais $D_1$ und der Basiswiderstand 33 eines Freigabe-Schalttransistors 34. Die Basis dieses Transistors ist mit dem Freigabemodul 15 verbunden. Dieses enthält einen Schalttransistor 35, dessen Basis über einen einstellbaren Widerstand 36 sowie ein Anpassungsglied 37 an den Stromwandler 9 (Fig. 1) angeschlossen ist.

Wird nun die Anordnung durch Betätigen des Hauptschalters 7 in Betrieb gesetzt, so gelangt über das Netzteil 17 Spannung an die Eingangsklemmen 38, 39 des Schaltmoduls 16. Über den geschlossenen Kontakt $d_3$ eines noch nicht erregten Abschaltrelais $D_3$, welches als magnetisches Haftrelais mit mechanischer Rückstellung ausgebildet ist, sowie den in der dargestellten Position befindlichen Umschaltkontakt $d_4$ und die Ausgangsklemme 40 des Schaltmoduls 16 erhält die Phasenüberwachungseinheit 11 (Fig. 1) positive Spannung. Die negative Spannung gelangt über die Klemme 39 des Schaltmoduls 16 an das Relais $D_2$, den gemeinsamen Pol seines Umschaltkontaktes $d_2$ und einen Serienwiderstand 41 des Relais $D_4$. Dieser Widerstand und ein weiterer dazu in Serie geschalteter Widerstand 42 sind so bemessen, daß dieses Relais zunächst nicht anziehen kann. Entsprechend dem vom Stromwandler 9 gemessenen Motorstrom gelangt eine von der Anpassungsstufe 37 erzeugte Steuergröße an die Klemme 43 und über den einstellbaren Widerstand 36 an die Basis des Schalttransistors 35. Vor Erreichen einer bestimmten Vorspannung am Basiswiderstand 44 ist der Schalttransistor 35 gesperrt. Dadurch wird die Basis des Freigabe-Schalttransistors 34 positiv, so daß dieser Transistor leitet und das Relais $D_1$ anzieht. Sobald der Motorstrom einen bestimmten Schwellwert, der am Widerstand 36 einstellbar ist, überschreitet, wird der Schalttransistor 35 leitend, so daß die Spannung an der Basis des Freigabe-Schalttransistors 34 so weit absinkt, daß das Relais $D_1$ abfallen würde, wenn nicht gleichzeitig durch zwischenzeitliches Auftreten der Oberwellenspannung die Transistoren 32, 34 von dieser durchgesteuert würden. Damit ist die Schaltung « geschärft ». Der Scharfmachungspunkt wird dabei so gewählt, daß er durch den Magnetisierungsstrom des leerlaufenden Motors immer erreicht wird. Durch das Anlegen der Spannung hat auch das Relais $D_2$ angezogen und ein ihm parallelliegender Kondensator 45 wird aufgeladen, so daß das Relais gegen Abfallen bei kurzzeitigen Stromunterbrechungen durch Umschaltvorgänge des Umschaltkontaktes $d_4$ gesichert ist. Durch Anziehen des Relais $D_2$ gelangt dessen Umschaltkontakt $d_2$ von der dargestellten Position in die entgegengesetzt gerichtete und schließt damit den Widerstand 41 kurz, so daß nunmehr auch das Relais $D_4$ anziehen und seinen Kontakt $d_4$ schließen kann. Das Abschaltrelais $D_3$ bleibt jedoch durch die Diode 47 von der Spannungsversorgung abgetrennt. Durch das Anziehen des Relais $D_4$ gelangt allerdings auch dessen Umschaltkontakt $d_4$ von der dargestellten in die umgekehrte Position, so daß das Abschaltrelais $D_3$ nunmehr für die Abschaltung vorbereitet ist. Wegen des nunmehr geschlossenen Arbeitskontaktes $d_4$ und des noch geschlossenen Ruhekontaktes $d_3$ ist der Trennschalter 5 über die Klemmen 48, 46 des Schaltmoduls 16 einschaltbar. Dabei gelangt Netzspannung an den Stromzwischenkreis-Umrichter 2, 3, 4, 8, so daß der Motor 1 in Betrieb gesetzt wird. Durch den Kontakt $d_4$ ist erreicht, daß bei nicht oder nicht mehr vorhandener Versorgungsspannung an den Klemmen 38, 39 der Motor 1 nicht einschaltbar ist bzw. ausgeschaltet wird. Nachdem der Motorstromkreis in Betrieb ist, liegt die Oberwellenspannung aller drei Phasen an den entsprechenden Eingängen der Anpassungs- und Entkopplungsstufen 18, 19, 20, die daraus eine Steuerspannung bilden, die über die Impulsformerstufe 26 und den Übertrager 27 mit Gleichrichter 28 als Gleichspannung am Widerstand 31 abfällt und damit an der Basis des Schalttransistors 32 auftritt, so daß dieser und der Transistor 34 leitend werden und das Relais $D_1$ erregt und dessen Kontakt $d_1$ geschlossen bleibt. Wegen der gleichartigen Funktion aller Überwachungsglieder sind damit, das Auftreten der Oberwellenspannung in den betreffenden Phasen vorausgesetzt, auch die Kontakte $d_1'$ und $d_1''$ geschlossen. Damit liegen alle Phasenüberwachungsglieder auch nach der Betätigung des Umschaltkontaktes $d_4$ über die geschlossene Kontakte $d_1$, $d_1'$ und $d_1''$ weiterhin an Spannung.

Damit hat die Überwachungsanordnung einen stationären Zustand erreicht, der den Normalfall kennzeichnet. Tritt nun im Motorstromkreis ein Phasenkurzschluß auf, so bricht die Oberwellenspannung in der betreffenden Phage zusammen. Dies hat zur Folge, daß die Basisspannung des Schalttransistors 32 zu Null wird und dieser sperrt. Damit fällt auch das Relais $D_1$ ab und öffnet seinen zugeordneten Kontakt $d_1$. Gleichzeitig bricht die Spannung sn der Klemme 40 des Schaltmoduls zusammen, so daß das Relais $D_2$ abfällt. Damit gelangt sein Umschaltkontakt $d_2$ wieder in die dargestellte Position, so daß das Abschaltrelais $D_3$ erregt wird. Dabei ist die Größe des Widerstandes 41 so gewählt, daß das Relais $D_4$ trotz der Freigabe dieses Widerstandes durch $d_4$ angezogen bleibt. Durch Öffnen des Kontaktes $d_3$ wird der Erregerkreis des an die Klemmen 48, 46 des Schaltmoduls angeschlossenen Trennschalters 5 geöffnet und unterbricht den primären Motorstromkreis.

Nachdem das Abschaltrelais $D_3$ eine mechanische Rückstellung besitzt, kann die Anordnung erst dann wieder in Betrieb genommen werden, wenn diese Rückstellung von Hand erfolgt ist, so daß eine Wiedereinschaltung des Motors erst dann möglich ist, wenn die Störung von einer Bedienungsperson vor Ort « quittiert » worden ist.

Wegen der Serienschaltung der Kontakte $d_1$, $d_1'$ und $d_1''$ erfolgt die Abschaltung in jedem Falle, gleichgültig ob der Kurzschluß in einer oder in allen Phasen auftritt.

Wegen der Betriebsbereitschaft nur bei angezogenen Relais $D_1$ ist die gesamte Schaltung bis auf die Schalttransistoren 32 und 34 selbstüberwachend, d. h. falls irgendeine Störung bis zu diesen Transistoren auftritt. erfolgt eine Unterbrechung des Motorstromkreises. Ein weiterer Vorteil besteht darin, daß im Fall einer Störung und dem dadurch bedingten Öffnen eines der Kontakte $d_1$ und dem dabei ansprechenden Abschaltrelais $D_3$ durch dessen sich öffnenden Ruhekontakt $d_3$ gleichzeitig die Versorgungsspannung von der Überwachungseinrichtung abgeschaltet wird. Durch diese Abtrennung der Überwachungsanordnung vom Netz im Störungsfall werden Rückwirkungen durch undefinierte Schwingungsvorgänge der Ausgangs-Spannung des Umrichters, wie sie im Abschaltmoment auftreten können, unwirksam gemacht. Ein weiterer Vorteil besteht darin, daß die Anordnung durch das Freigabemodul erst dann scharf gemacht wird, wenn ein bestimmter Mindeststrom fließt. Dies ist deshalb von Bedeutung, weil die Oberwellenspannung erst bei einer Mindeststromgröße des Motorstroms vorhanden ist. Wird dieser Mindeststrom unterschritten, ist die Anordnung automatisch gesperrt. Dadurch ist ein Maximum en Sicherheit gegen Fehlabschaltung gewährleistet.

**Patentansprüche**

1. Elektrische Kurzschluß-Überwachungsanordnung (100) für einen mittels eines Stromzwischenkreis-Umrichters (2, 3, 4, 8), bestehend aus einem netzgeführten, netzseitigen Thyristorstromrichter (4), einer Zwischenkreisdrossel (3) und einem selbstgeführten, maschinenseitigen Stromrichter (2), drehzahlgeregelten Drehstrommotor (1) einschließlich seiner Zuleitungen (U, V, W), dadurch gekennzeichnet, daß die vom Stromzwischenkreis-Umrichter (2, 3, 4, 8) als Folge der Kommutierung erzeugte, der Motorspannung überlagerte Oberwellenspannung am Ausgang des Umrichters ermittelt, ausgefiltert und einer Phasenüberwachungseinheit (11) zugeführt ist, die beim Unterschreiten einer wählbaren Amplitudengröße der Oberwellenspannung wenigstens einer Phase ein Schaltmodul (16) ansteuert, dessen Schaltmittel ($D_3$) beim Auftreten eines Ausschaltsignals einen Trennschalter (5) für die Unterbrechung des Motorstromkreises betätigt.

2. Kurzschluß-Überwachungsanordnung nach Anspruch 1, dadurch gekennzeichnet, daß die Phasenüberwachungseinheit (11) gebildet ist aus je einer Phase zugeordneten Phasenüberwachungsgliedern (12, 13, 14), bestehend aus je einer netzseitig angeordneten Ausgangs- und Entkopplungsstufe (18, 19, 20), die ein Filterglied (24) zum Aussieben der Oberwellenspannung enthält, je einer folgenden Auswerteelektronik (21, 22, 23), sowie einem Freigabemodul (15), das die Auswerteelektronik (21, 22, 23) beim Überschreiten eines vorgebbaren Motorstrom-Istwertes freigibt, die ihrerseits bei Unterschreiten eines vorgebbaren Wertes der Oberwellenspannung dem Schaltmodul (16) ein Ausschaltsignal für die Unterbrechung des Motorstromkreises zuführt.

3. Kurzschluß-Überwachungsanordnung nach Anspruch 2, dadurch gekennzeichnet, daß jede Auswerteelektronik (21, 22, 23) ausgangsseitig ein Überwachungsrelais ($D_1$) enthält, das während der Dauer des Vorhandenseins der Oberwellenspannung anspricht und bei deren Wegfall oder einer Störung innerhalb der vorgeschalteten Bauelemente abfällt, und die Kontakte ($d_1$, $d_1'$, $d_1''$) der Überwachungsrelais aller Auswerteelektronikstufen in Serie geschaltet und mit dem Schaltmodul (16) verbunden sind, so daß bei Öffnen eines Kontaktes das Schaltmittel ($D_3$) des Schaltmoduls im Sinne einer Unterbrechung des Motorstromkreises anspricht.

4. Kurzschluß-Überwachungsanordnung nach einem der vorhergehenden Ansprüche, dadurch gekennzeichnet, daß das Schaltmittel ($D_3$) beim Auftreten eines Ausschaltsignals auch die Stromversorgung der Phasenüberwachungseinheit (11) während der Ausschaltdauer unterbricht.

5. Kurzschluß-Überwachungsanordnung nach einem der vorhergehenden Ansprüche, dadurch gekennzeichnet, daß als Schaltmittel ein magnetisches Haftrelais (D₃) mit mechanischer Rückstellung benutzt ist.

### Claims

1. An electrical short-circuit monitoring arrangement (100) for a rotary current motor (1) — including its supply lines (U, V, W) — speed-regulated by means of an intermediate-circuit current converter (2, 3, 4, 8) comprising a line-commutated thyristor power converter (4) on the grid side, an intermediate circuit choke (3), and a self-commutated power inverter (2) on the machine side, characterised in that the harmonic voltage produced by the intermediate-circuit current converter (2, 3, 4, 8) as a result of the commutation, overlaying the motor voltage, is determined at the output of the converter, filtered out and supplied to a phase monitoring unit (11) which, if a selectable amplitude variable of the harmonic voltage of at least one phase is not reached, activates a circuit module (16) whose switching equipment (D₃) operates, when a cut-out signal occurs, an isolating switch (5) for interrupting the motor current circuit.

2. Short circuit monitoring arrangement according to claim 1, characterised in that the phase monitoring unit (11) comprises phase monitoring elements (12, 13, 14) each allocated to one phase, each comprising one output and decoupling stage (18, 19, 20), arranged on the grid side, which contains a filter element (24) to filter the harmonic voltage, one following evaluating electronics (21, 22, 23), as well as a clearing module (15), which clears the evaluating electronics (21, 22, 23) when a pre-given motor current actual value is crossed, which (electronics), for its part, when a pre-given value of the harmonic voltage is not reached, supplies to the circuit module (16) a cut-out signal for interrupting the motor current circuit.

3. Short circuit monitoring arrangement according to claim 2, characterised in that each evaluating electronics (21, 22, 23) contains, on the output side, a monitoring relay (D₁) which reacts during the duration of the presence of the harmonic voltage and falls-off when it ceases or there is a disturbance within the superposed construction elements, and in that the contacts (d₁, d₁'.d₁") of the monitoring relays of all the evaluating electronics stages are connected in series and linked with the circuit module (16), so that, when a contact is opened, the switching equipment (D₃) of the circuit module reacts in the sense of interrupting the motor current circuit.

4. Short circuit monitoring arrangement according to one of the preceding claims, characterised in that the switching equipment (D₃) also interrupts the current supply of the phase monitoring unit (11) during the cut-out duration, when a cut-out signal occurs.

5. Short circuit monitoring arrangement according to one of the preceding claims, characterised in that, as switching equipment, a magnetic latching relay (D₃) with mechanical resetting is used.

### Revendications

1. Dispositif électrique (100) de contrôle de courts-circuits pour un moteur à courant triphasé (1) dont la vitesse de rotation est réglée au moyen d'un mutateur intermédiaire (2, 3, 4, 8), constitué par un convertisseur statique à thyristors (4) commuté par le réseau et situé côté réseau, par une bobine intermédiaire (3) et par un convertisseur statique (2) à commutation automatique, situé côté machine, y compris les lignes d'alimentation (U, V, W) du moteur, caractérisé par le fait que la tension d'ondulation, qui est produite par le mutateur intermédiaire (2, 3, 4, 8) par suite de la commutation, est superposée à la tension du moteur et est présente à la sortie du commutateur, est déterminée, séparée par filtrage et envoyée à une unité (11) de contrôle des phases, qui, lorsque l'amplitude de la tension d'ondulation tombe au-dessous d'une valeur pouvant être sélectionnée, commande une phase d'un module de commutation (16), dont les dispositifs de commutation (D₃) activent, lors de l'apparition d'un signal de coupure, un disjoncteur (5) en vue d'interrompre le circuit du moteur.

2. Dispositif de contrôle de courts-circuits selon la revendication 1, caractérisé en ce que l'unité (11) de contrôle des phases est formée par des circuits (12, 13, 14) de contrôle des phases, qui sont associés aux phases respectives et sont constitués chacun par un étage de sortie et de découplage (18, 19, 20) monté côté réseau et qui contient un élément de filtre (24) servant à séparer par filtrage la tension d'ondulation, un dispositif électronique d'évaluation (21, 22, 23) branché en aval ainsi qu'un module de libération (15), qui libère le circuit électronique d'évaluation (21, 22, 23) lorsque la valeur réelle du courant du moteur dépasse une valeur pouvant être prédéterminée et qui, pour sa part, envoie au module de commutation (16) un signal de coupure servant à interrompre le circuit du moteur, lorsque la tension d'ondulation tombe au-dessous d'une valeur pouvant être prédéterminée.

3. Dispositif de contrôle de courts-circuits suivant la revendication 2, caractérisé par le fait que chaque circuit électronique d'évaluation (21, 22, 23) contient, côté sortie, un relais de contrôle (D₁) qui répond pendant la durée de la présence de la tension d'ondulation et qui retombe lors de l'absence de cette tension ou dans le cas d'une perturbation intérieure des composants branchés en amont, et que les contacts (d₁, d₁', d₁") des relais de contrôle de tous les étages électroniques d'évaluation sont branchés en série et reliés au module de commutation (16) de sorte que lors de l'ouverture d'un contact, le dispositif de commu-

tation ($D_3$) du module de commutation répond dans le sens d'une interruption du circuit du moteur.

4. Dispositif de contrôle de courts-circuits suivant l'une des revendications précédentes, caractérisé par le fait que lors de l'apparition d'un signal de coupure, le dispositif de commutation ($D_3$) interrompt également l'alimentation en courant de l'unité (11) de contrôle des phases pendant la durée de la coupure.

5. Dispositif de contrôle de courts-circuits suivant l'une des revendications précédentes, caractérisé par le fait qu'on utilise, comme dispositif de commutation, un relais magnétique à adhérence ($D_3$) comportant un système de rappel mécanique.

FIG 1

FIG 2

0 183 108